# EUROPÄISCHE PATENTSCHRIFT

(11) **EP 2 049 370 B1**
(45) Veröffentlichungstag und Bekanntmachung des Hinweises auf die Patenterteilung: **02.10.2013**
(21) Anmeldenummer: 06775790.6
(22) Anmeldetag: 02.08.2006
(51) Int. Cl.: B60R 25/00, B62B 5/04, B60R 25/09

(54) **WEGFAHRSPERRE FÜR EINKAUFSWAGEN**
IMMOBILIZATION OF SHOPPING CARTS
ANTIDEMARRAGE POUR UN CHARIOT DE SUPERMARCHE

(43) Veröffentlichungstag der Anmeldung: 22.04.2009
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2006/001351
(87) Internationale Veröffentlichungsnummer: WO 2008/014728

(56) Entgegenhaltungen:
- DE-A1- 3 700 411
- US-A- 5 357 182
- US-A- 5 821 856
- US-B1- 6 502 669

## Beschreibung

### Technisches Gebiet

Die Erfindung betrifft eine Wegfahrsperre für Einkaufswagen, die verhindert, dass ein mit einer solchen Wegfahrsperre ausgerüsteter Einkaufswagen außerhalb eines zulässigen Bereichs verwendet wird.

### Stand der Technik

Eine derartige Wegfahrsperre ist beispielsweise bekannt aus der US 6362728.

US 5 357 182 beschreibt ebenfalls eine Wegfahrsperre nach dem Oberbegriff des Anspruchs 1.

Dort wird mindestens eine der Rollen am Einkaufswagen blockiert, wenn der Einkaufswagen den zulässigen Bereich verlässt.

Nachteilig bei dieser bekannten Lösung ist, dass die zur Verfügung gestellten Einkaufswagen auch zu Zeiten, in denen das Geschäft nicht geöffnet hat innerhalb des zulässigen Bereichs bewegt werden können.

Es kann vorkommen, dass die Einkaufswagen aus den Abstellbereichen herausgezogen und Ziel von Vandalismus werden, wobei ein wahlloses Verteilen der Einkaufswagen über das gesamte Gelände noch zu den harmlosen Formen des Vandalismus zählt.

Doch bereits diese harmlose Form verursacht einen großen Schaden, da die einzeln und weit verteilt umherstehenden Einkaufswagen einen hohen Personalaufwand zum Einsammeln erfordern.

Bei Einkaufswagen, die zusätzlich zu der Wegfahrsperre mit einem Pfandschloss ausgestattet sind ist das Herausfahren der Einkaufswagen aus dem Abstellbereich schon erschwert, da für jeden Einkaufswagen in das Pfandschloss ein Pfandelement eingeschoben werden muss, bevor die Einkaufswagen entkoppelt werden können, eine garantierte Sicherheit gegen ein nicht autorisiertes Entnehmen der Einkaufswagen aus den Abstellbereichen ist dennoch nicht gegeben.

### Offenbarung der Erfindung

### Technische Aufgabe

Es ist Aufgabe der Erfindung, generell zu verhindern, dass die Einkaufswagen zu Zeiten, in denen das Geschäft nicht geöffnet ist aus den Abstellbereichen herausgenommen und bewegt werden können.

### Technische Lösung

Die Aufgabe wird gelöst durch eine Vorrichtung, welche die Wegfahrsperren an den Einkaufswagen aktiviert, wenn die Einkaufswagen außerhalb der Öffnungszeiten des Geschäftes in den Abstellbereichen geparkt sind.

### Vorteilhafte Wirkungen

Durch diese Lösung wird wirksam das Entnehmen der Einkaufswagen aus den Abstellbereichen gehemmt.

Durch eine automatische, zeitgesteuerte, an die jeweiligen Öffnungszeiten angepasste Aktivierung der Wegfahrsperre wird sichergestellt, dass die in den Abstellbereichen geparkten Einkaufswagen nicht mehr frei bewegbar sind, wenn das Geschäft geschlossen ist.

### Kurze Beschreibung der Zeichnungen

Es zeigten:
- Figur 1: ein typisches Areal eines Geschäftes mit Parkplatz und einem Abstellplatz für Einkaufswagen,
- Figur 2: den Abstellplatz zusammen mit einer Vielzahl ineinander geschobener Einkaufswagen in Seitenansicht.

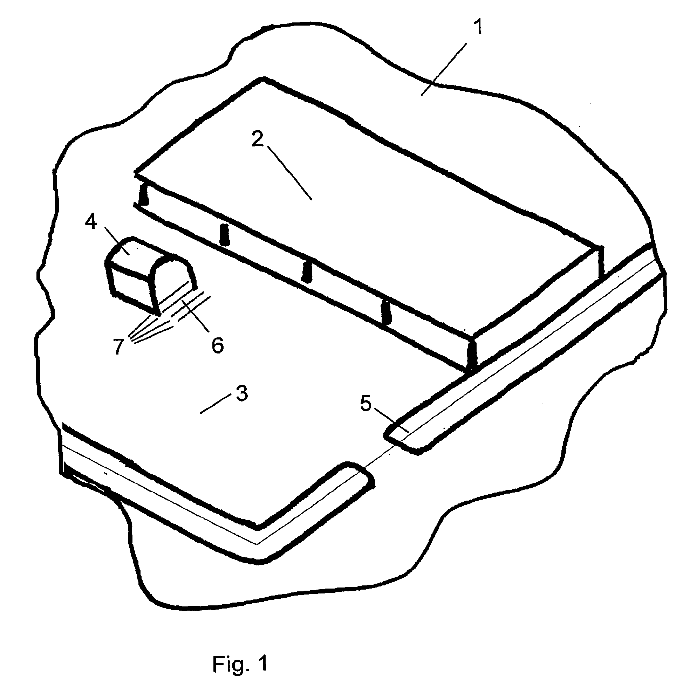

Das in Figur 1 gezeigte Areal 1 eines Geschäftes umfaßt neben dem eigentlichen Verkaufsgebäude 2 einen Aussenbereich 3. Dieser Aussenbereich dient hauptsächlich als Parkplatz und Zufahrt zum Geschäft.

In einer Garage 4 für Einkaufswagen werden Einkaufswagen auf Pfandbasis den Kunden für die Dauer des Einkaufs zur Verfügung gestellt.

Nach dem Verladen der gekauften Ware wird der Einkaufswagen üblicherweise vom Kunden wieder zurück in die Garage 4 gebracht, um den Pfand zurückzuerhalten.

Um zu verhindern, dass die Einkaufswagen bestimmungswidrig ausserhalb des Areals 1 verwendet werden können, ist das Areal 1 von einer unterirdisch verlegten Signalleitung 5 umgeben.

Die von der Signalleitung 5 abgegebenen Signale bewirken berührungslos eine Aktivierung der am Einkaufswagen angebrachten Wegfahrsperre, sobald der Einkaufswagen diese Signalleitung überfährt.

Daraufhin wird dieser Einkaufswagen in vielen Fällen stehengelassen und das Pfand im Einkaufswagen zurückgelassen.

Das im Einkaufswagen zurückgelassene Pfand ist einer der Gründe weshalb beliebige Dritte motiviert sind den leeren, außerhalb des Areal 1 stehenden Einkaufswagen trotz der von der Wegfahrsperre hervorgerufenen Schwierigkeiten beim Schieben in die Garage 4 zurückzubringen.

Beim Zurückbringen dieses Einkaufswagens in die Garage 4 passiert dieser zwangsläufig eine im Eingang zur Garage liegende Zone 6.

In dieser Zone 6 sind ebenfalls unterirdisch Signalleitungen 7 verlegt.

Diese Signalleitungen 7 können wahlweise ein Signal ausstrahlen, welches die Wegfahrsperre aktivieren oder deaktivieren kann.

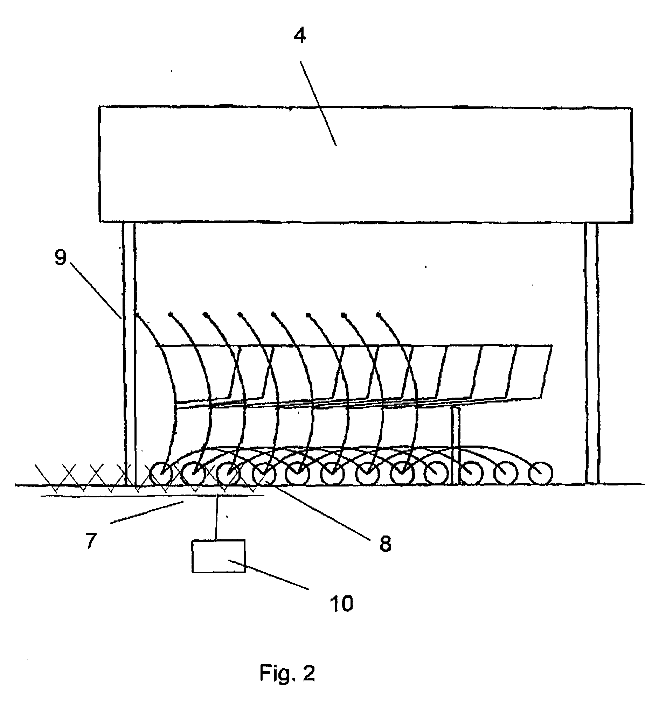

Die Figur 2 zeigt die Garage 4 in welcher sich eine Vielzahl von ineinander eingeschobenen Einkaufswagen 8 befindet.

Unterhalb der Fahrbahn im Eingangsbereich der Garage befinden sich die Signalleitungen 7.

Während der Öffnungszeiten des Geschäfts senden die Signalleitungen 7 ein Signal aus, welches berührungslos die Wegfahrsperre eines Einkaufswagens, der in die Garage geschoben wird wieder deaktiviert, sofern die Wegfahrsperre zuvor aktiviert worden war.

Auf diese Weise wird bewirkt, dass ein Einkaufswagen, dessen Wegfahrsperre beim Verlassen des Areals 1 aktiviert wurde wieder frei beweglich wird, wenn er in die Garage 4 zurückgebracht wird. Anschließend wird auch das Pfand wieder zurückerstattet.

Die Rückerstattung des Pfandes ist eine Motivation für den ursprünglichen Benutzer, der den Einkaufswagen außerhalb des Areals 1 geschoben hat diesen Einkaufswagen doch wieder zurückzubringen, da er erkannt hat, dass ein Weiterschieben des Einkaufswagens außerhalb des Areals 1 zu mühsam ist und er sich daher für ein Zurückbringen des Einkaufswagens in die Garage 4 entscheidet.

Für einen Dritten, der einen Einkaufswagen ausserhalb des Areals 1 findet ist die Rückerstattung des Pfandes ebenfalls Motivation den Einkaufswagen in die Garage 4 zurückzubringen.

Erfindungsgemäß wird nach Betriebsschluss des Geschäftes von den Signalleitungen 7 ein solches Signal ausgestrahlt, welches berührungslos die Wegfahrsperre der in der Nähe stehenden Einkaufswagen aktiviert.

Bei Betriebsschluß des Geschäftes kann es zu stochastischen Schwankungen hinsichtlich der Anzahl der in der Garage 4 abgestellten und ineinander geschobenen Einkaufswagen kommen.

Erfindungsgemäß sind daher die Signalleitungen 7 so angeordnet, dass das von ihnen ausgesandte Signal sowohl die Wegfahrsperren der etwas außerhalb des Garagen Portals 9 stehenden Einkaufswagen, als auch die Wegfahrsperren einiger Einkaufswagen im Inneren der Garage 4 erreicht und blockieren kann.

Unabhängig von der Anzahl der abgestellten Einkaufswagen wird so erreicht, dass zumindest an einigen der am Ende der Reihe abgestellten Einkaufswagen die Wegfahrsperre aktiviert wird.

Die blockierten Einkaufswagen stehen ineinander geschoben und bilden hierdurch einen verbundenen, blockierten Pulk, der nur gemeinsam bewegt werden kann.

Dies ist nur noch mit wesentlich erhöhtem Aufwand möglich und stellt daher einen ausreichenden Schutz gegen spontan auftretenden Vandalismus dar.

Bei solch einem spontan auftretenden Vandalismus fehlt meist die planerische Vorarbeit der Täter, um ein entsprechendes Werkzeug mitzunehmen, mit welchem der Widerstand des blockierten Pulks überwunden werden könnte.

Durch den nur schwer bewegbaren, blockierten Pulk am Ende der Reihe sind auch die weiter vorne in der Reihe stehenden Einkaufswagen geschützt, da man diese erst erreichen kann, wenn der blockierte Pulk überwunden ist.

Je größer die Zahl der Einkaufswagen mit blockierter Wegfahrsperre ist, desto größer wird der Widerstand des blockierten Pulks. Wenn die Signalleitungen 7 im Bereich der gesamten Garage 4 verlaufen, dann sind die Wegfahrsperren aller Einkaufswagen blockiert.

Bei den Überlegungen, die zur Entstehung der vorliegenden Erfindung führten hat man zusätzlich die Tatsache berücksichtigt, dass die ersten Einkaufswagen einer Reihe seltener entnommen werden, als die letzten Einkaufswagen.

Ebenso wurde berücksichtigt, dass die Wegfahrsperren batteriebetrieben sind und jede Aktivierung der Wegfahrsperre den Zeitpunkt eines Batteriewechsels näher rücken lässt.

Als Ergebnis dieser Überlegungen wurde die Anordnung der Signalleitungen 9 etwa so gewählt, dass etwa das letzte Drittel der Reihe im Einflussbereich der Signalleitungen 9 liegt.

Die Position eines bestimmten Einkaufswagens innerhalb der Reihe unterliegt zufälligen Schwankungen. Einkaufswagen werden immer vom Ende der Reihe entnommen und nach Gebrauch wieder an das Ende der Reihe zurückgestellt.

Das jeweilige Ende der Reihe zwischen dem Zeitpunkt der Entnahme des Einkaufswagens aus der Reihe und dem Zeitpunkt des Zurückstellens in die Reihe schwankt zufällig.

Hierdurch ergibt sich bei Betriebsschluss eine zufällige Position eines Einkaufswagens innerhalb der Reihe. Eine zufällige Auswahl aus der Gesamtheit der Einkaufswagen steht nach Betriebsschluß im Einflussbereich der Signalleitungen 9.

Hierdurch verteilt sich die Anzahl der Aktivierungen statistisch auf eine breitere Basis, woraus vorteilhaft wiederum ein durchschnittlich längerer Zeitraum bis zu einem Batteriewechsel resultiert.

Neben den Wegfahrsperren, die durch elektrische Signale berührungslos aktivierbar sind, gibt es auch Wegfahrsperren, die durch Magnetfelder aktivierbar sind.

In einer anderen Ausgestaltung der Erfindung ist es vorgesehen, dass im Bereich des Portals der Garage ausserhalb der Öffnungszeiten diese Magnetfelder durch einen Elektromagneten erzeugbar sind.

Der Bereich in welchem die Magnetfelder auf die Einkaufswagen wirken kann hierbei so gewählt werden, dass er im wesentlichen dem Einflussbereich der von den Signalleitungen 6 ausgesandten Signalen entspricht.

Bei Wegfahrsperren, welche durch Magnetfelder aktivierbar sind, bewirkt das Magnetfeld in den meisten Fällen nur eine kleine Bewegung einer mechanischen Aktivierungs-Komponente, wobei sich die Wirkung der Wegfahrsperre erst nach einer gewissen Fahrstrecke einstellt.

Werden diese Aktivierungs-Komponenten durch das Magnetfeld eines außerhalb der Geschäftszeiten eingeschalteten Elektromagneten bewegt, so stellt sich die Wirkung der Wegfahrsperre sofort beim Herausziehen des Einkaufswagens ein.

Bleibt der Einkaufswagen in der Garage stehen und der Elektromagnet wird zu Beginn der Öffnungszeit des Geschäftes wieder abgeschaltet, dann kehrt die Aktivierungs-Komponente wieder zurück in die Ruhelage und der Einkaufswagen lässt sich nun frei bewegen.

Es existieren auch Wegfahrsperren, welche ebenfalls durch Magnetfelder aktivierbar sind, bei denen -im Gegensatz zu den letztgenannten Wegfahrsperrendie Aktivierungs-Komponenten beim Wegfall des Magnetfeldes nicht wieder in die Ruhelage zurückkehren.

Bei solchen Wegfahrsperren würde das Einschalten des Elektromagneten dazu führen, dass die Wegfahrsperre aktiviert ist und auch aktiviert bleibt, wenn der Elektromagnet wieder abgeschaltet wird.

Für solche Wegfahrsperren ist erfindungsgemäß vorgesehen, dass sich der Elektromagnet etwas ausserhalb der Garage befindet und eine am Einkaufswagen angebrachte Wegfahrsperre erst dann aktiviert wird, wenn der Einkaufswagen tatsächlich außerhalb der Öffnungszeiten aus der Garage entnommen wird.

Hierdurch wird erreicht, dass bei außerhalb der Geschäftszeit aus der Garage entnommenen Einkaufswagen sofort und in unmittelbarer Nähe der Garage die Wegfahrsperre wirkt.

### Gewerbliche Anwendbarkeit

Die Erfindung ist gewerblich einsetzbar bei einer Vielzahl von Geschäften, die ihre Einkaufswagen mit Wegfahrsperre ausgestattet haben.

## Patentansprüche

1. Wegfahrsperre für Einkaufswagen mit
- einem am Einkaufswagen angeordneten, durch elektromagnetische und / oder magnetische Felder aktivierbarem Element, durch welches das Bewegen des Einkaufswagens verhindert oder zumindest erschwert wird,
- einer Sendevorrichtung durch welche das zum Aktivieren des am Einkaufswagen angeordneten Elements erforderlichen elektromagnetischen und / oder magnetischen Feldes aussendbar ist
- die Sendevorrichtung ein Element umfasst, durch welches das Aussenden des elektromagnetischen und / oder magnetischen Feldes auf einen vorbestimmten Zeitraum begrenzt ist.
**dadurch gekennzeichnet, dass**
die Sendevorrichtung (7) zum Aussenden des elektromagnetischen und / oder magnetischen Feldes in der Nähe des Portals einer Einkaufswagen-Garage (4), in welcher die Einkaufswagen abstellbar sind, angeordnet ist. So, dass zumindest an einigen der am Ende der Reihe abgestellten Einkaufswagen die Wegfahrsperre aktiviert wird.

2. Wegfahrsperre nach Anspruch 1
**dadurch gekennzeichnet, dass**
die Sendevorrichtung (7) zum Aussenden des elektromagnetischen und / oder magnetischen Feldes in der Nähe des Portals einer Garage (4), in welcher die Einkaufswagen abstellbar sind angeordnet ist und der Wirkungsbereich der Sendevorrichtung (7) außerhalb und innerhalb der Garage (4) liegt.

3. Wegfahrsperre nach Anspruch 1 oder 2
**dadurch gekennzeichnet, dass**
die Sendevorrichtung (7) zum Aussenden des elektromagnetischen und / oder magnetischen Feldes in der Nähe des Portals einer Garage (4), in welcher die Einkaufswagen abstellbar sind angeordnet ist und der Wirkungsbereich der Sendevorrichtung (7) außerhalb der Garage liegt.

## Claims

1. An immobiliser for shopping trolleys with
- an element arranged on the shopping trolley, which can be activated by means of electromagnetic and/or magnetic fields and by means of which the movement of the shopping trolley is prevented or at least impeded,
- a transmission device, by means of which the electromagnetic and/or magnetic field necessary for activating the element arranged on the shopping trolley can be emitted,
- the transmission device comprises an element, by means of which the emission of the electromagnetic and/or magnetic field is limited to a predetermined time period,
**characterised in that**
the transmission device (7) for emitting the electromagnetic and/or magnetic field is arranged in the vicinity of the portal of a shopping trolley garage (4), in which the shopping trolleys can be parked, so that the immobiliser is activated at least at a few of the shopping trolleys parked at the end of the row.

2. The immobiliser according to Claim 1,
**characterised in that**
the transmission device (7) for emitting the electromagnetic and/or magnetic field is arranged in the vicinity of the portal of a garage (4), in which the shopping trolleys can be parked and the sphere of action of the transmission device (7) lies outside and inside the garage (4).

3. The immobiliser according to Claim 1 or 2,
**characterised in that**
the transmission device (7) for emitting the electromagnetic and/or magnetic field is arranged in the vicinity of the portal of a garage (4), in which the shopping trolleys can be parked and the sphere of action of the transmission device (7) lies outside the garage.

## Revendications

1. Dispositif d'immobilisation pour chariot de supermarché avec
- un élément disposé sur le chariot de supermarché, pouvant être activé par des champs électromagnétiques et/ou magnétiques, grâce auquel le déplacement du chariot de supermarché est empêché ou au moins rendu difficile,
- un dispositif d'émission grâce auquel on peut émettre le champ électromagnétique et/ou magnétique nécessaire pour activer l'élément disposé sur le chariot de supermarché,
- le dispositif d'émission comprenant un élément grâce auquel l'émission du champ électromagnétique et/ou magnétique peut être limitée à un laps de temps prédéterminé,
**caractérisé en ce que**,
pour l'émission du champ électromagnétique et/ou magnétique, le dispositif d'émission (7) est disposé à proximité du portail d'un garage de chariot de supermarché (4) dans lequel on peut déposer les chariots de supermarché de manière à ce que le dispositif d'immobilisation soit activé au moins au niveau de certains des chariots de supermarché disposés à la fin de la rangée.

2. Dispositif d'immobilisation selon la revendication 1,
**caractérisé en ce que**
le dispositif d'émission (7) pour l'émission du champ électromagnétique et/ou magnétique est disposé à proximité du portail d'un garage (4) dans lequel on peut déposer les chariots de supermarché et **en ce que** la zone d'influence du dispositif d'émission (7) se situe à l'extérieur et à l'intérieur du garage (4).

3. Dispositif d'immobilisation (7) selon la revendication 1 ou 2,
**caractérisé en ce que**
le dispositif d'émission (7) pour l'émission du champ électromagnétique et/ou magnétique est disposé à proximité du portail d'un garage (4) dans lequel on peut déposer les chariots de supermarché et **en ce que** la zone d'influence du dispositif d'émission (7) se situe à l'extérieur du garage.
